# EUROPEAN PATENT SPECIFICATION

(11) **EP 3 528 112 B1**
(45) Date of publication and mention of the grant of the patent: **13.05.2020**
(21) Application number: 18157460.9
(22) Date of filing: 19.02.2018
(51) Int. Cl.: G06F 9/44, G06F 9/50

(54) **MANAGEMENT ECOSYSTEM OF SUPERDISTRIBUTED HASHES**
MANAGEMENT-ÖKOSYSTEM VON SUPERVERTEILTEN HASHES
ÉCOSYSTÈME DE GESTION DE HACHAGES SUPER DISTRIBUÉS

(43) Date of publication of application: 21.08.2019
(73) Proprietor: Deutsche Telekom AG, 53113 Bonn (DE)
(72) Inventor: Mikityuk, Alexandra, 12159 Berlin (DE); Osiptschuk, Eugen, 13088 Berlin (DE); Stichel, Nicolas, 12527 Berlin (DE); Calian, John, 14199 Berlin (DE)
(74) Representative: Vossius & Partner Patentanwälte Rechtsanwälte mbB

(56) References cited:
- CN-A- 107 579 931
- US-A1- 2010 049 640
- US-A1- 2017 353 309
- Matthew Spoke ET AL: "AION White Paper", , 31 July 2017 (2017-07-31), pages 1-23, XP055478571, Retrieved from the Internet: URL:https://aion.network/media/en-aion-net work-technical-introduction.pdf [retrieved on 2018-05-25]

## Description

The invention relates to the field of management of data processing networks. In particular, the invention relates to a Management Ecosystem of Superdistributed Hashes. In other words, the invention relates to a network and a method and system for management thereof.

With an ever increasing number of connected network devices and bandwidth of data networks, distributed management will become increasingly important. Therefore, blockchain as a method and a system has become very popular. Blockchains are known to offer a plurality of advantages vis-à-vis conventional data processing methods and systems. A first exemplary advantage is that the data is stored in a distributed ledger instead of on a central server, and therefore, risk of data-loss is reduced. A further exemplary advantage is the feasibility of manipulation proof transactions, which allows for the generation of a blockchain based currency. Other advantages may relate to: identity services, storage services, smart contracts, IOT services, data provenance, and other.

The skilled person is aware of a number of different blockchain related methods and systems. In fact, there is a virtually exploding number of blockchains, blockchain based services, and/or blockchain related services. However, most of the currently available blockchains are focusing on one specific application. This leaves a developer of a new application essentially with two options, either to adopt the new application according to an existing blockchain and specific functions available therein; or developing a new blockchain for a new set of functions according to the new application. Neither option is feasible for most applications and/or most developers. Furthermore, each blockchain may use different programming languages.

In other words, currently the use of a blockchain is limited to the functions directly available in a specific blockchain.

"AION White Paper" by Matthew Spoke ET AL relates to a network designed to support custom blockchain architectures, while providing a trustless mechanism for cross-chain interoperability.
US 2017/353309 A1 relates to a method for delegating behavior of a smart contract associated with a blockchain to code that is not part of the blockchain.

US 2010/049460 A1 relates to a method of charging for services on a communication network comprising receiving a request to perform a charging function from an application via a northbound interface of a charging enabler.

CN 107579931 A1 relates to a fitting method for block chains, namely configuration and utilization of computing resources of a cloud service provider and access of a multi-scene application of a third-party user.

WO 2017/167548 A1 relates to a computer implemented method to execute a software application in a network attached computing environment, the application being defined by a set of required software services to constitute the application, the required services being selected from services indicated in a component registry, the method comprising: recording a block to a blockchain data structure, the new block identifying at least a subset of the set of required services; receiving at least one further block from the blockchain data structure, each of the further blocks referencing a service provider for providing at least one of the required services; and selecting at least one service providers identified in the blockchain and defining a specification for an application assembler component to assemble the software application, the specification identifying selected service providers.

WO 2017/187397 A1 relates to a generic operating system for coordinating, controlling and/or influencing the activities of a device. The invention is implemented using a blockchain platform with which the operating system is arranged to interact. The blockchain may be the Bitcoin blockchain. In a preferred embodiment, the device is an Internet of Things (IoT) device. WO 2017/187397 A1 also relates to a computer-implemented control system and corresponding method for controlling a device, the system comprising a device configured for wireless communication with a network and having an IP address and a public-private key cryptographic key pair associated with the device; a software-implemented control component arranged to monitor the state of a blockchain network and/or transmit blockchain transactions to the blockchain network; and a set of instructions arranged for execution by the control component to control the functionality of the device. The control component is arranged to access the set of instructions from a stored location which is separate to the device. The instructions may be stored in a Distributed Hash Table (DHT) and accessed for download and installation by the control component from the DHT as and when needed. The location of the DHT and/or instructions may be indicated or provided using metadata provided within a blockchain transaction.

GB 2 540 977 A relates to a computer-implemented method of a resource provider for access control in a network connected computer system, wherein a blockchain data structure accessible via the network stores digitally signed records validated by network connected miner software components. A provider record is associated with the resource provider, the method allowing for identifying an access control role definition for access to the resource, the role including a specification of access permissions.

US 2016/203021 A1 relates to techniques, software, apparatuses, and systems configured for managing a navigation stack of an application including multiple primary user interfaces (UIs). In at least one embodiment, a method can include providing data to multiple primary UIs that causes each of the multiple primary UIs to present a view of a plurality of views of an application state of the software application, receiving data indicating the application state of the application has changed, and pushing a workflow activity of the application onto a navigation stack, wherein each workflow activity includes data corresponding to a configuration of a view model module and a list of views associated with the configuration, the view model module provides the data that causes the plurality of views to be presented on the multiple primary UIs in response to the configuration being loaded on in the view model module.

As has been discussed before, the related art is based on different types of blockchain networks. On one hand, each blockchain has different functions and/or properties, which results in a set of advantages and a set of disadvantages. On the other hand, each blockchain has different requirements for the network and/or the system it operates on. Furthermore, each blockchain may have a different programming interface and/or use a different programming language.

In consequence, when starting from a set of predetermined functions and/or properties, e.g. to achieve a certain behavior of the network, it is not possible to simply use a single blockchain of the prior art.

Said set of predetermined functions may comprise: storage, payment, authentication, and IoT communications. Properties may include properties of the function and/or the blockchain as, e.g. response time of the function or required security level. Also the mere combination of a plurality of different blockchains of the prior art is not possible, since none of the known blockchains has a suitable interface for interacting with another blockchain. It is clear that the definition of function and property may overlap, since some properties of the blockchain are deeply interwoven with the functions of the blockchain and vice versa.

For example, an application, also referred to as a business use case, may relate to a micro insurance. Said use case may have a set of predetermined functions comprising payment, authentication, and smart contract. A set of predetermined properties for this use case may comprise high data-security and high scalability to a suitable number of users. It is obvious to the skilled person that there is no suitable blockchain for this use case. Even if there would be a blockchain for this particular use case, it is apparent that there is a virtually endless number possible and/or required of modifications, which would exceed the capabilities of any specific blockchain.

The above problems are among those solved by the subject-matter of the independent claims of the present invention. The dependent claims relate to further aspects of the invention.

It is one general aspect of the invention to provide a data processing network with an operating stack, which has at least one blockchain. The operating stack has at least two interfaces. The operating stack is connected to the blockchain via a first interface, also referred to as southbound interface and the operating stack is connected to at least one application via a second interface, the second interface also referred to as northbound interface. The blockchain has at least one function. Additionally or alternatively, the blockchain may also have at least one property. Said northbound interface allows the application to access at least one of the blockchain functions and/or properties through the operating stack. It is preferred that the northbound interface is an application programming interface and/or the southbound interface comprises a blockchain specific plug-in. It is further preferred that the other application is a distributed application.

It is one further general aspect of the invention that the operating stack is itself operating as a distributed software stack on the network. Thus, the operating stack is formed by connecting a plurality of software stacks operating on each node of the network, said software stacks are also referred to as node stacks. It is preferred, that the software-stack operating on each node of the network comprises at least one blockchain.

It is one still further general aspect of the invention that a node stack is configured in a configuration step, distributed to network nodes of a network and upon instantiation forms a connection to other node stacks to form the operating stack. It is preferred that a predetermined set of functions and/or properties is received in the configuration step and based on the predetermined functions and/or properties at least one suitable blockchain providing said functions and/or property is added to the node stack and thus added to the operating stack.

It is one still further general aspect of the invention that the invention allows to vertically connect a function via the operating stack to a blockchain and also to connect a plurality of blockchains horizontally via the operating stack.

Particular and preferred aspects of the invention are set out in the accompanying independent claims. Combinations of features from the dependent and/or independent claims may be combined as appropriate and not merely as set out in the claims.

### Short description of the drawings

The above-described objects, advantages and features of the present invention, as well as others, will be more readily understood from the following detailed description of certain preferred embodiments of the invention, when considered in conjunction with the accompanying drawings in which:
- Fig. 1 a: shows a state of the art data processing network with a blockchain-as-a-service provided thereto;
- Fig. 1b: shows a data processing network according to an embodiment of the invention;
- Fig. 2a: shows a block diagram of the high level architecture according to one embodiment of the invention;
- Fig. 2b: shows a detailed block diagram of the high level architecture according to one embodiment of the invention;
- Fig. 3a: shows a block diagram of a configuration system for a node stack in the configuration step according to an embodiment of the invention;
- Fig. 3b: shows a block diagram of an operating stack according to an embodiment of the invention;
- Fig. 4: shows a block diagram of a detail of the operating stack according to an embodiment of the invention; and
- Fig. 5: shows a detailed block diagram of a dispatcher and a blockchain plug-in according to an embodiment of the invention.

### Detailed description of the drawings

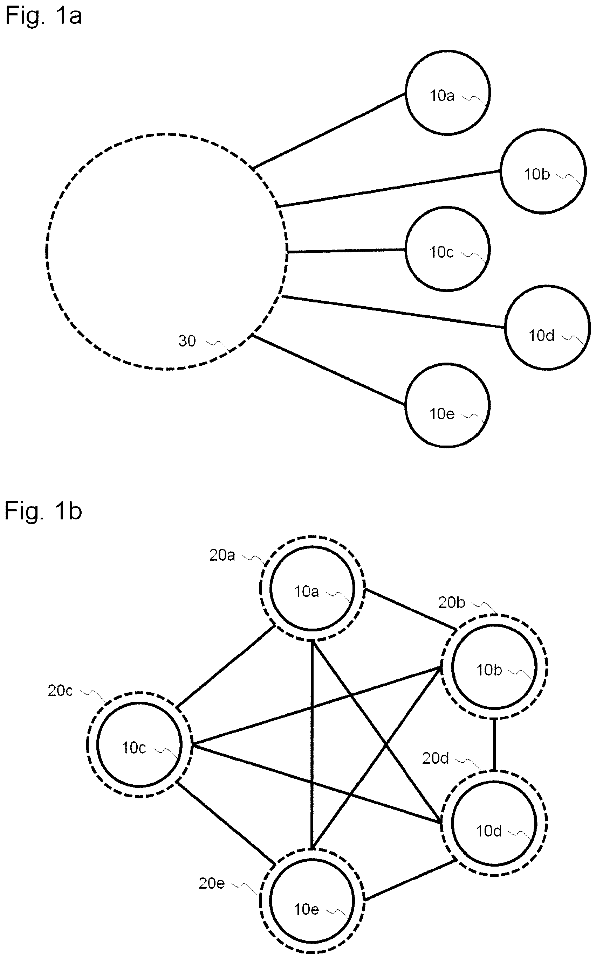

In Fig. 1a, a state of the art data processing network with a blockchain-as-a-service provided thereto is shown. A blockchain 30 is provided as a service to the network. The blockchain may comprise further nodes. The service is preferably provided by a service provider using a dedicated technical infrastructure. The service may be accessed via user nodes 10a to 10e. For accessing the service, each node must be connected with the blockchain 30.

In the following, embodiments of the invention will be described. It is noted that some aspects of every described embodiment may also be found in some other embodiments unless otherwise stated or obvious to the skilled person. However, for increased intelligibility, each aspect will only be described in detail when first mentioned and any repeated description of the same aspect will be omitted.

In Fig. 1b, a data processing network according to an embodiment of the invention is shown. In contrast to the state of the art as shown in Fig. 1a, the blockchain is fully integrated into the network. Each node 10a to 10e is also part of at least one blockchain network. The at least one blockchain network preferably comprises a plurality of blockchains. Any combinations of functions and/or properties of the plurality of blockchains can be used, which is achieved by an operating stack 20a to 20e operating in the network on every node of the network. The node 10a to 10e may be a physical node or even may be a further network comprising a sub-network of nodes.

### 1. Terms used throughout the present invention

It is acknowledged that the definition of terms relating to the blockchain technology has not yet been standardized; therefore, the same terms may be used to describe different features in the state of the art also different terms may be used to describe the same feature. As much as possible, the same terms as in the book "Mastering Bitcoin: Unlocking digital cyptocurrencies", A. Antonopoulos, O'reilly UK Ltd., 2nd edition, 2017, ISBN-10 14919543388 are used which herewith is incorporated.

However, in particular the following terms relate to features of the subject-matter of the invention and their definition may differ from definitions used in at least one document describing the related art.

The term network preferably refers to a data processing network, formed by at least one, preferably a plurality of, network nodes. The network nodes are connected via at least one network connection to each other. It is preferred that the complete, but at least a sub-network of the network is connected via direct connections. In other words, a peer-to-peer network is preferred in the embodiments of the invention, however, the scope of the invention is not limited thereto and also encompasses centralized networks and/or mixed network architectures.

The term distributed application preferably refers to an application that is distributed within a network. In particular, the application operates and/or is executed on each, some, or at least one of the network nodes forming a network. The term includes embodiments where a same or similar copy of a code and/or sub-code is independently operated on each network node. However, the term also includes embodiments where the application itself, i.e., the code thereof is distributed within the network. In the latter embodiments, the application cannot be considered to be on a specific one of the network nodes but must be considered to be on every node and thus be on the network itself. In those embodiments, the application may be accessed via a specific one of the network nodes and/or an external connection into the network, but still may not be considered to operate on said specific one of the network nodes.

The term software stack, also often referred to as a solution stack, preferably refers to a set of software sub-systems and/or components needed to create a complete platform such that no additional software is needed to support applications. Applications are said to "run on" or "run on top of' the resulting stack. This definition of a software stack may overlap with what is known as system software. The components of a software stack may be developed by different developers independently from one another.

Furthermore, the terms stack also refers to a specific type of data-structure and or method to compile code by stacking sub-systems and/or components on top of each other. The operation of introducing a new sub-system and/or component is referred to as adding to the stack. According to common practice, some components/sub-systems of an overall system are chosen together often enough that the particular set is referred to by a name representing the whole, rather than by naming the parts.

The term node stack preferably refers to a software stack designed to operate on a node of a network, i.e. the accumulation of code that is actually executed on a node of a network.

The term operating stack, which is used for one aspect of the invention, preferably refers to a software stack that is formed from or by the at least one node stack and runs on the network rather than on a specific one of the network nodes. Thus, the operating stack preferably runs independently from each specific one of the network nodes. This definition of an operating stack may overlap with what is known as system software.

The term blockchain preferably refers to a blockchain based data processing network and/or method of data processing. A blockchain may have a plurality of functions and/or properties, preferably data processing functions. According to the underlying principle, the definition of the blockchain overlaps with that of the underlying network. Each blockchain is operated by or operated on a blockchain network. The nodes of the blockchain network are preferably identical to the nodes of the physical network. However, in some embodiments, a plurality of nodes of the same blockchain may be instantiated on a specific node of a physical network. Additionally or alternatively, at least one node of a plurality of different blockchains may be instantiated on a specific node of a physical network. The term blockchain may also be used for related technologies such as distributed technologies, e.g. hashgraph, IOTA tangle, torrents, etc.

Thus, a physical network may comprise a plurality of blockchains. In other words, the physical network may comprise a plurality of blockchain networks. It is common understanding, that the at least one blockchain are not interlinked, i.e. they usually do not interact or interfere with each other by using the same virtual and/or physical recourses of the network.

In all embodiments of the invention, different connection methods may be used to connect network nodes of a network. Preferably, an IP based network protocol is used for communication with and within the network.

### 2. Configuration Step

In embodiments of the invention, a configuration step is performed. In the configuration step, an operating stack is configured by configuring at least one node stack. The configuration of the node stack is based on an input of a set of predetermined functions and properties. Preferably, the functions and properties are defined from a perspective of a distributed application.

In all embodiments, a configuration system is used for configuring the node stack. The configuration system comprises a user interface and a matching unit. The configuration system may be physical computing device and/or may be a distributed system. In other words, the configuration system may be distributed on at least one network node.

The configuration system is configured to receive the set of predetermined functions and properties via the user interface. The matching unit is configured to receive data relating to the received predetermined functions and properties.

Furthermore, the matching unit is configured to determine at least one blockchain from a plurality of available blockchains by analyzing data relating to the received predetermined functions and properties.

In a preferred embodiment, the configuration system has a database configured for storing information about functions and/or properties of available blockchains and/or stack components relating to said available blockchains. The database may be a central database and/or a distributed database in the configuration system. In some embodiments, the configuration system is a distributed application.

The matching unit of all embodiments is configured to add stack components relating to the determined at least one blockchain to the node stack based on the information data relating to the received predetermined functions and properties. The stack-components comprise at least one of the following: the determined blockchain, an application programming interface for the at least one function and/or property of the determined blockchain, a dispatcher, and a blockchain specific plug-in.

Preferably, the matching unit is further configured to also add a copy and/or an adapted version of the configuration system itself to the node stack.

In a first group of preferred embodiments, the data relating to the received predetermined functions and properties is derived from analyzing commands provided and extracting the required functions and/or properties from inputted code, which is provided in at least one standard programming language. In a second group of embodiments, the data relating to the received predetermined functions and properties relates to a set of required functions and properties directly inputted to the user interface. In a third group of embodiments, the data relating to the received predetermined functions and properties is derived from instructions to add certain components to the stack.

The aforementioned groups of embodiments relate to different use cases with users of different skill.

The blockchain plug-ins will be defined below.

A corresponding configuration method according to embodiments of the invention, for a configuration system as described above, comprises the steps of: receiving an input about at least one set of predetermined functions and properties; optionally extracting the functions and properties from the input; matching functions and properties with at least one blockchain having said functions and/or properties or a plurality of blockchains which combine to have the functions and properties; and adding stack components relating to said blockchain and/or blockchains to the node stack.

It is preferred that a web based user interface is used to receive input about the predetermined functions.

### 3. Distribution step

In embodiments of the invention, a distribution step is performed. In the distribution step, the configured node stack is distributed to network nodes in a network. In a preferred embodiment, the node stack is copied onto a physical node device using a physical storage medium having stored a copy of the node stack thereon. In another preferred embodiment, the node stack is downloaded from a central server and/or a cloud based storage onto the physical node device. In another preferred embodiment, the node stack is sent from a central server, in a peer-2-peer network, and/or a cloud based storage onto the physical node device. Alternatively or additionally, the node stack may be installed on a cloud, i.e. on a network.

For some embodiments, it is preferred to use a managed distribution scheme having a user interface for selecting at least one node stack to be distributed via one of the aforementioned methods. It is preferable, that the user interface is the same first user interface, which has been previously used in the configuration step.

Physical node devices in all embodiments may be dedicated node units and/or the shared node units. Shared refers to shared virtual and/or physical recourses.

A corresponding distribution method according to embodiments of the invention comprises the step of distributing the configured node stack to nodes of a physical network.

### 4. Connecting step

In embodiments of the invention, a connecting step is performed. In the connecting step, at least one node stack is instantiated on at least one node. It is preferred that a plurality of node stacks is instantiated on a plurality of nodes. In one embodiment, the node stacks are configured to discover and connect to other node stacks in the network and thus build a network according the network architecture of the underlying physical network.

Alternatively or additionally, a network between the node stacks may be formed, which has a different network architecture than the underlying physical network. A peer to peer network is a preferred architecture for the network between the node stacks.

In a preferred embodiment, the node stack is configured to form a respective blockchain network, suitable for the respective blockchain to operate effectively. The architecture of the respective blockchain network is preferably predetermined by the type of blockchain of the respective blockchain. Preferably, the blockchain network is formed in parallel to the operation stack being formed.

In all embodiments in the connecting step, the operating stack is formed. It is preferred that the operating stack enables a distributed application running on the network. However, the operating stack may alternatively or additionally be formed by a software-component on each node.

In other words, in some embodiments of the invention, the operating stack runs on every node of the network. However, it is preferred that the operating stack runs on the network formed in the connecting step. Thus, the operating stack may even be identical to the distributed node stack but the invention is not limited thereto, since the operating stack may also be a distributed application and can not be limited to a specific one of the node stacks.

In one embodiment of the invention, at least one node is configured as management nodes. It is preferred that in the configuration step the node stack is configured so that at least one of the first instantiated node stacks is configured to be one of the management nodes. In particular, the management nodes may be configured to support discovery and connection establishing methods, which are in general known to the skilled person. Furthermore, the management node may have a user interface configured to manage the connecting step.

The user interface of the management nodes preferably comprises the interface of the copy and/or adapted version of the configuration system comprised in the node stack. Additionally or alternatively, the user interface comprises a management interface suitable for managing the stack, preferably for updating the software stack.

In embodiments, which are based on an IP based network protocol, the management nodes may be configured to store the IP numbers of all nodes in the network. In a preferred embodiment, the IP numbers are stored in the node stack in the configuration step and/or managed by the management node during the connecting and operating step.

A corresponding connecting method according to embodiments of the invention comprises steps of instantiating at least one management node and/or discovery and connection of node stacks to form the operating stack.

### 5. Operating step

In embodiments of the invention, an operating step is performed. In the operating step, the operating stack is configured to operate as an interface from and to the blockchains. The operating stack has a northbound interface and a relay unit with a southbound interface.

The northbound interface is configured to communicate, preferably as an application programming interface, with applications, which are based on at least one of the predetermined functions and properties. The applications are preferably distributed applications; however, the scope of the invention is not limited thereto. In embodiments with distributed applications, it is preferred that the applications are distributed on the same or a sub-network of the network of the operating stack.

The relay unit is configured to relay the communication from the northbound interface to the at least one blockchain in the operating stack. The relay unit comprises the southbound interface. Preferably, the relay unit further comprises at least one of the following a balancer/routing unit, an authentication unit, and a dispatcher unit.

The southbound interface is configured to communicate with the at least one blockchain, in other words, with the blockchain network in the operating stack. Part of the communication may be to relay information received via the northbound interface, said information being intended for a specific one of the blockchain functions, to a respective blockchain having said function and/or property. Another part of the communication may be to relay information received from a blockchain via the southbound interface to the northbound interface.

The southbound interface preferably comprises at least one blockchain specific plug-in. The plug-in comprises at least one function adaptor according to the functions of the blockchain. Each function adaptor is configured to receive information from the northbound interface and convert said information into a blockchain-specific at least one command and/or at least one transaction. Furthermore, the function adaptor is further configured to convert a blockchain specific at least one command and/or at least one transaction into information to be sent to the northbound interface.

Furthermore, in embodiments of the invention in the operating step, the operating stack comprises a dispatcher unit. The dispatcher unit, is preferably the dispatcher unit of the copy and/or adapted version of the configuration system comprised in the operating stack. The dispatcher unit is configured to perform at least one of the following steps: add at least one plug-in to the southbound interface; remove at least one plug-in from the southbound interface; and replace at least one function in at least one plug-in of the southbound interface.

The operating stack may also be configured to perform general processing tasks for information received via the northbound interface from an application. Preferably, the general processing tasks relate to pre- or post-processing of information for use with at least one blockchain function.

### 6. Diagrams of the invention

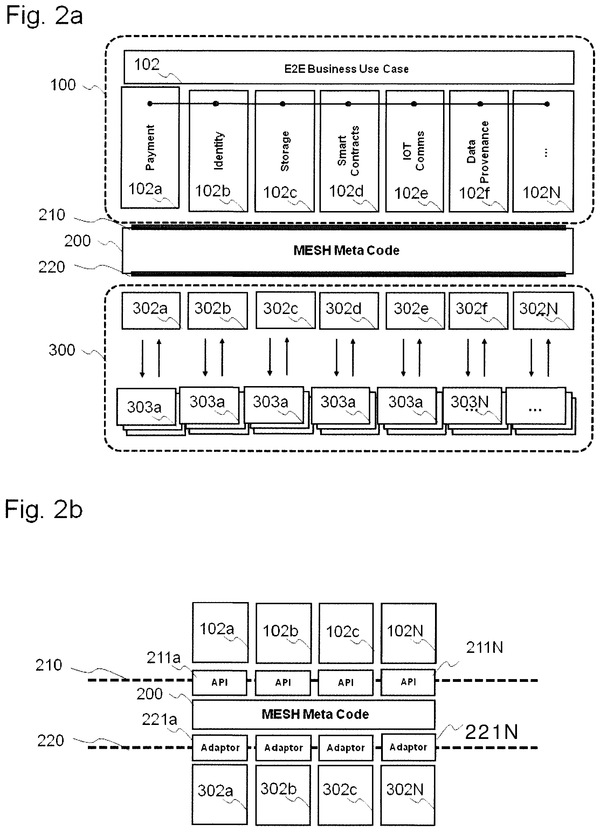

Fig. 2a shows a block diagram of the high level architecture according to one embodiment of the invention. According to the invention, the operating stack 200, also referred to as MESH-OS, functionally connects an application 100 to a distributed tech network 300. In detail, the application 100 may have at least one use case 102. A use case 102 may require different functions such as payment 102a, identity 102b, storage 102c, smart contracts 102d, data provenance 102f, and/or any number of other functions 102N. However, the present invention is not restricted to a plurality functions 102a to 102N. There are embodiments, where only one of function is present. The aforementioned functions are listed for as typical functions but are not limiting the scope of the invention.

The application 100 communicates with the operating stack 200 via the northbound interface 210. A more detailed description of said communication will be provided below. Inside the operating stack 200, the requested functionality is matched with at least one blockchain 302a to 302N, which is comprised in the distributed tech network 300. However, the present invention is not restricted to a plurality of blockchains 302a to 302N. There are embodiments, where only one blockchain 302a is present. The operating stack 200 communicates with the distributed tech network 300 via the southbound interface 220.

The distributed tech network 300 may only comprise blockchains and thus be alternatively referred to as at least one blockchain. However, the distributed tech network 300 may also comprise further distributed technologies 303a to 303N, which are not necessarily based on a blockchain. However, the present invention is not restricted to a plurality of distributed technologies 303a to 303N. There are embodiments, where only one or even none distributed technologies is present.

Since each function and/or properties may be matched to at least one blockchain and at least one function and/or property may be matched to the same blockchain, the number of blockchains may differ from the number of functions. Furthermore, *mutatis mutandis*, the number of distributed tech 303a to 303N may differ from the number of blockchains 302a to 302N.

Fig. 2b shows a detailed block diagram of the high level architecture according to one embodiment of the invention, in particular at the interfaces 210 and 220 of the operating stack 200.

The northbound interface 210 comprises a plurality of application programming interfaces 211 a to 211N. However, the present invention is not restricted to a plurality of application interfaces 211a to 211N. There are embodiments, where only one of application interface 211 a is present. Each function 102a to 102N is functionally connected to at least one corresponding one of the plurality of application programming interfaces 211 a to 211N. One example of the aforementioned functional connection may be that in the code of the use case 102 the functionality 102a to 102N is programmed against at least one of the application programming interfaces. It is preferred that a unified coding language is used for the application programming interfaces 211a to 211N at the northbound interface 210.

The southbound interface 220 comprises at least one adaptor 221a. Preferably, the southbound interface 220 comprises a plurality of adaptors 221a to 221N. Each blockchain 302a to 302N is functionally connected to at least one of the adaptors 221a to 221N. Preferably, the adaptors use a unified coding language for communication with the operating stack. Therefore, the adaptors form a defined interface for the blockchains 302a to 302N. The skilled person realizes that each blockchain may require at least one specific adaptor.

In the following description, different terms relating to the southbound interface will be used. The terms relate to certain aspects of the southbound interface, some terms focus on functional features, other focus on structural features. Some functional features cannot be described in terms of corresponding structural features and vice versa. Therefore, the definition may overlap. In general terms, the southbound interface comprises adaptors to communicate with the at least one blockchain. In terms of programming code, the southbound interface comprises at least one plug-in, which corresponds to the adaptor, however, also a plurality of plug-ins may correspond to one of said adaptors. Furthermore, each plug-in may comprise at least one function adaptor.

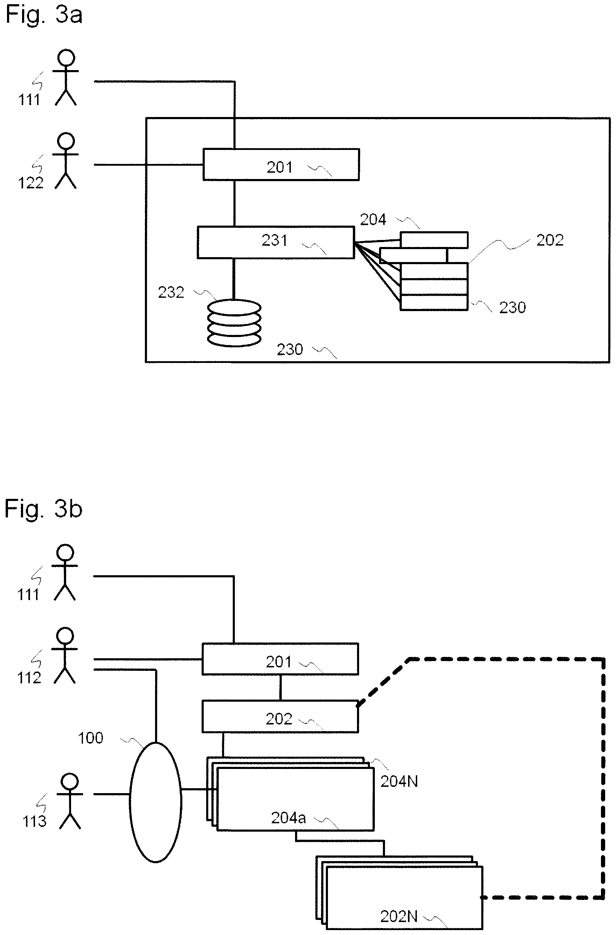

Fig. 3a shows a block diagram of a configuration system for a node stack in the configuration step according to an embodiment of the invention. In embodiments of the invention, a configuration system 230 comprises a user interface 201 and a matching unit 231. The configuration unit preferably further comprises at least one database 232.

The user interface 201 is configured to receive a set of predetermined functions and/or properties from an application developer 111. Additionally or alternatively, the user interface 201 is configured to receive a set of predetermined functions and/or properties from operating stack developer.

The matching unit 231 is configured to receive data from the user interface 201, which relates to the set of predetermined functions and/or properties. The matching unit 231 is further configured to determine at least one blockchain from a plurality of available blockchains, which has at least one of the predetermined functions and/or properties. Additionally or alternatively, the matching unit 231 may be configured to determine at least two blockchains from a plurality of available blockchains, which combine to have at least one of the predetermined functions and/or properties.

For the step of determining, the matching unit 231 preferably uses the at least one database 232 comprising information about available blockchains and their respective functions and properties and/or stack components relating to the available blockchains. Preferably, the stack components comprise the blockchain.

Furthermore, the matching unit 231 is configured to build a node stack 20. The node stack comprises at least a copy and/or adapted version of the configuration system 230, a management server 202, and a docker 204 comprising stack components relating to the at least one determined blockchain 302a.

Fig. 3b shows a block diagram of an operating stack according to an embodiment of the invention. In embodiments of the invention, the operating stack comprises at least one docker 204a to 204N, at least one first user interface 201 and at least one management server 202 to 202N.

The term docker above and hereinafter is used as a synonym for a container environment.

The at least one docker 204a to 204N is the main component of each node stack operated on each physical node of the network and thus also is a main component of the operating stack 200 according to the invention. A detailed description of the inner workings of the docker 204a to 204N will be provided below.

Three aspects regarding the docker are considered to be equally preferable according to the invention. In a first aspect, one docker 204a to 204N is comprised in one node stack. Accordingly, the one docker comprises at least one blockchain node. In a second aspect, at least one docker 204a to 204N is comprised in one node stack. Accordingly, each of the at least one docker comprises a single blockchain node. The third aspect relates to a hybrid architecture combining the first and the second group. The blockchains may for example be grouped into at least one docker according to similar or complementary functions and/or hardware requirements.

In all embodiments, the at least one docker 204a to 204N is functionally connected with the at least one management server 202 to 202N. It is noted that for illustration purposes one management server 202 is depicted separate from the other management servers and connected thereto by a thick dashed line. This is not limiting the scope of the invention, in particular the management node 202 is not a special node and all further management nodes 202N are equal. Furthermore, in some embodiments, the management nodes 202 and 202N may be the same node, i.e. only one management node is comprised in the operating stack.

Preferably, the at least one management server 202 is operated on the management node and thus forms part of the operating stack. Preferably, the corresponding code is part of each node stack, however, is only operated on the management node.

In the operation step in the embodiments, the operating stack according to the invention has first user interface 201. Preferably, the first user interface 201 is a web based user interface. The user interface is comprised in the copy and/or adapted version of the configuration system 230, which was added to the stack in the configuration step. At least one user may interact with said user interface 201. Examples of the interaction are:
e1) A system administrator 111 of the operating stack may create new instances of the operating stack and/or the corresponding one of the docker 204 to 204N. Alternatively or additionally, the administrator 111 may also manage user accounts on the operating stack.
e2) An application developer 112 may use an application programming interface against the user interface 201 to develop the application 100. Alternatively or additionally, the administrator 111 may also manage user accounts on the operating stack.
e3) An application 100 may store data in the at least one blockchain.

Furthermore, the first user interface 201 is functionally connected to the at least one management server 202 to 202N, preferably for management of operating stack instance(s) and redirecting input thereto.

The user 113 may interact with the application 100. The application 100 is functionally connected to the operating stack 200 directly, i.e. is connected with the northbound interface. In other words, the application 100 is functionally connected with the at least one docker 204a to 204N of the operating stack 200.

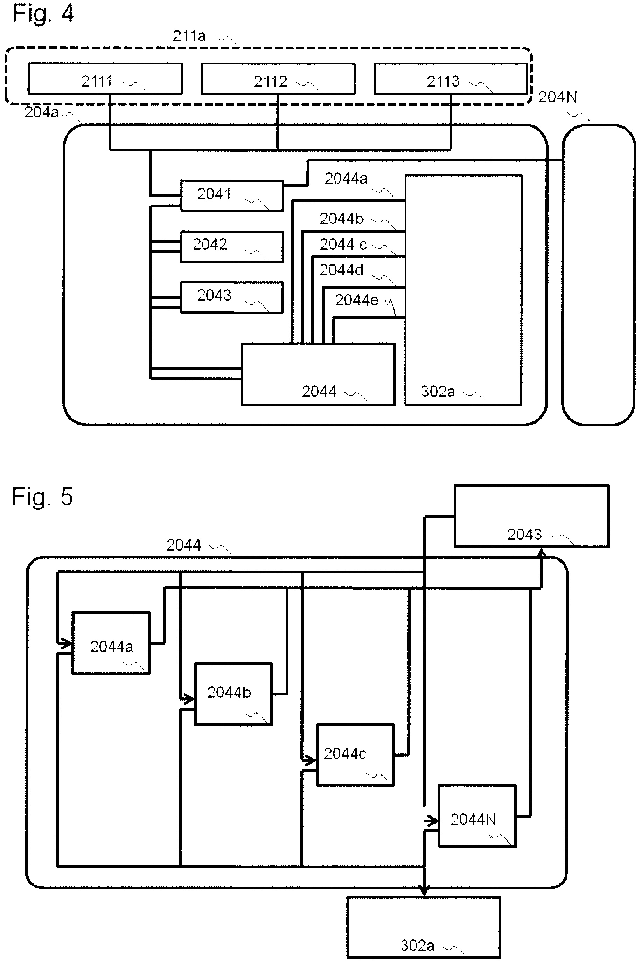

Fig. 4 shows a block diagram of a detail of the operating stack according to an embodiment of the invention. In particular, the application programming interface 211 a of the northbound interface 210 and the docker 204a are shown in detail.

The application programming interface 211 a of the northbound interface 210 comprises preferably a websocket 2111 as well as a Hypermedia As The Engine Of Application State (HATEOAS) and/or a Representational state transfer (REST) application architecture 2112. Alternatively or additionally, the application programming interface 211a may also comprise other components 2113, which would be considered necessary by the skilled person.

The docker 204a comprises a balancer/router unit 2041, an authentication unit 2042, a dispatcher unit 2043, and a blockchain specific plug-in 2044. The docker 204a as shown in Fig. 4 also comprises one node of a blockchain 302a. This is for illustration only and not intended to limit the scope of the invention. The following detailed description also applies to embodiments with multiple dockers and/or multiple blockchains per docker.

It is to be understood that each of the described components of the plug-in is referred in the singular term for better intelligibility, however, the invention is not limited thereto. In particular, the singular term also includes the plural term. In other words, the wording at least one is omitted with respect of the components of the docker 204a.

The balancer/router unit 2041 is configured to balance the load between different dockers and/or to route request to other dockers. Thus, said unit 2041 is configured to forward information, such as updates, to other operating stacks and/or docker instances 204N.

The plug-in 2044 is functionally connected to the at least one blockchain 302a. Said plug-in 2044 and the corresponding functional connections 2044a to 2044e are in other parts of the description referred to as blockchain adaptor.

In other words, in terms of programming code, the southbound interface is integrated into docker 204a, in particular in the plug-in 2044. The plug-in 2044 thus communicates via the southbound interface inside the docker with the blockchain 302a. In other words, on every node of the network a node stack is operated; the plurality of node stacks form at least one operating stack 200; the operating stack 200 comprises at least one docker 204a; and the at least one docker 204a comprises at least one plug-in 2044, which comprises the southbound interface to at least one blockchain. The at least one blockchain is also comprised in the at least one docker 204a.

The above-mentioned functional connections between the plug-in and the blockchain preferably comprise: the installation of a new blockchain node 2044a, updating of the blockchain node 2044b, reading a status of the blockchain node 2044c, reading and/or writing data to the blockchain node 2044d, and executing blockchain-specific operations 2044e.

Fig. 5 shows a detailed block diagram of a dispatcher and a blockchain plug-in according to an embodiment of the invention. The plug-in 2044 is functionally located between the dispatcher unit 2043 and the physical blockchain node 302a.

The plug-in 2044 comprises at least one function adaptor 2044a to 2044N, each corresponding to at least one function of the blockchain. The function adaptor is configured to inform about a name of at least one corresponding one of the functions. Examples of said names may be read, store, etc. The function adaptor 2044a to 2044N is further configured to receive and/or validate requests from the dispatcher unit 2043. Still further, the function adaptor is configured to send data in response to request to the dispatcher unit 2043.

The at least one function adaptor 2044a to 2044N is functionally connected to the corresponding blockchain 302a.

In the configuration step, the function adaptor 2044a to 2044N is configured to inform the dispatcher unit 2043 about contained functions of the blockchain and the dispatcher unit 2043 is configured to publish the information in the operating stack 200. Preferably the information is stored in the at least one database of the matching unit 230 and used to determine the at least one blockchain.

In the operating phase the dispatcher unit 2043 is configured to receive requests and to dispatch them to each function of the blockchain via a corresponding function adaptor 2044a to 2044N.

### 7. Additional Aspects of the invention

In embodiments, according to the invention, smart contracts may be used to update at least part of the operating stack.

In some embodiments, the operating stack is configured to be adapted dynamically during the operation phase. The adaptation is initiated via the second user interface. The step of adapting the operation stack preferably comprises at least one of the steps of: replacing a blockchain node, adding a blockchain node, or deleting a blockchain node. The step of adapting the operation stack preferably further comprises at least one of the steps of: replacing a plug-in, adding a plug-in, or deleting a plug-in. The step of adapting the operation stack preferably further comprises at least one of the steps of: replacing a function, adding a function, or deleting a function.

In some embodiments, the management server is configured to analyze at least one of the interfaces of the operating stack. Preferably, the management server is also configured to dynamically adapt the operating stack according to the results of the analyzing step. The analyzing step may comprise analyzing the performance of at least one connected blockchain.

In some embodiments, the physical recourses may be not equally distributed within the network. For example, some nodes may have high processing capabilities and other nodes may have high storage capabilities. According to the invention, the operating stack is configured to distribute the processing task within the network according to the available recourses. Preferably, the operating stack is also configured to add additional nodes if further recourses are required according to a result of an analyzing step. Additionally or alternatively, the operating stack is configured to include additional nodes based on an instruction received via the second user interface.

In some embodiments, in the configuration step, the set predetermined functions and/or properties ins determined based on analyzing an existing application in the matching unit. In other words, the matching unit is configured to recommend a blockchain suitable for providing at least one function and/or property based on an existing application inputted to the matching unit.

What has been described and illustrated herein are embodiments of the invention along with some of variations. The terms, descriptions and figures used herein are set forth by way of illustration only and are not meant as limitations. Those skilled in the art will recognize that many variations are possible within the scope of the invention, which is intended to be defined by the following claims in which all terms are meant in their broadest reasonable sense unless otherwise indicated.

## Claims

1. A computer-implemented method for operating a data processing network with an operating stack (200), the operating stack being configured for managing of at least one distributed application (100) and at least one blockchain based data processing network, which is suitable for providing at least one function and/or property, the method comprising:
a configuration performed by a configuration system (230), which comprises a user interface (201) for receiving information about at least one set of predetermined functions and/or properties (102a-102N) of the distributed application, with the steps of:
a) receiving in a matching unit (231) the information about at least one set of predetermined functions and/or properties of the distributed application,
b) determining in the matching unit at least one blockchain from a plurality of available blockchains (302a-302N), which is suitable for providing at least one function and/or property according to the received information about the at least one set of predetermined functions and/or properties,
c) adding the blockchain stack components (204a-204N) relating to said at least one blockchain to a software stack, and
d) repeating steps b) and c) until for every function and/or property of the received information about the at least one set of predetermined functions and/or properties, at least one respective blockchain has been determined and added to the software stack;
a distribution step of distributing the software stack to at least one node unit of the data processing network;
a connecting step of instantiating the software stack on the at least one node unit, wherein the instantiated software stack forms at least one blockchain network according to the at least one blockchain in the software stack and forms the operating stack; and
an operating step of
e) the operating stack providing a northbound interface (210) to the least one distributed application for at least one function or property of the at least one set of predetermined functions and/or properties and
f) the operating stack providing a southbound interface (220) to at least one blockchain function corresponding to the at least one function and/or property.

2. The method according to claim 1, wherein in the operating step the northbound interface performs the step of communicating with the distributed application via at least one application programming interface using a unified programming language (211a-211N), wherein the northbound interface has an application programming interface for each of the at least one function or property of the set of predetermined functions and/or properties.

3. The method according to claim 1 or 2, wherein southbound interface has at least one blockchain specific plug-in (2044), which has at least one function adaptor (2044a-2044N) for addressing each function of the blockchain, and
in the operating step the southbound interface performs the steps of
relaying incoming information, relating to the communication of the northbound interface, from the northbound interface to the at least one of the blockchain specific plug-in; and
relaying outgoing information, relating to the incoming information, from the at least one blockchain specific plug-in to the northbound interface.

4. The method according to claim 3, wherein the operating stack comprises a dispatcher unit (2043), which in the configuration step performs the steps of
receiving information about at least one available function and/or property from the at least one function adaptors in the at least one blockchain specific plug-in, and
informing the matching unit about the at least one available function and/or property; and
which in the operating step performs the steps of
dispatching incoming information from the northbound interface to a specific one of the at least one blockchain specific plug-in of the southbound interface, wherein the specific one of the at least one blockchain specific plug-in comprises a function adaptor corresponding to the at least one function and/or property to which the incoming information relates, and
dispatching outgoing information from the specific one of the at least one blockchain specific plug-in to the northbound interface.

5. The method according to any one of claims 1 to 4, wherein the operating stack comprises a management server (202), wherein the management server comprises at least one user interface (201) suitable for receiving instructions for reconfiguring the operating stack, and the management server in the operating step performs a reconfiguration step comprising at least one of the following steps:
replacing, adding, or deleting a blockchain from the software stack;
replacing, adding, or deleting a blockchain specific plug-in from the operating stack; and
replacing, adding, or deleting a function adaptor from a blockchain specific plug-in.

6. A data processing network with an operating stack for management of at least one distributed application suitable for performing the method according to any one of claims 1 to 5.

7. A data processing apparatus comprising means for carrying out the steps of the method of any one of claims 1 to 5.

8. A computer program product comprising instructions which, when the program is executed by a computer, cause the computer to carry out the method of any one of claims 1 to 5.

9. A computer-readable storage medium comprising instructions which, when executed by a computer, cause the computer to carry out the method of any one of claims 1 to 5.

## Patentansprüche

1. Computerimplementiertes Verfahren zum Betreiben eines Datenverarbeitungsnetzwerks mit einem Operating Stack (200), wobei der Operating Stack zum Verwalten von mindestens einer verteilten Anwendung (100) und mindestens einem Blockchainbasierten Datenverarbeitungsnetzwerk konfiguriert ist, das zum Bereitstellen von mindestens einer Funktion und/oder Eigenschaft geeignet ist, wobei das Verfahren aufweist:
eine Konfiguration, die durch ein Konfigurationssystem (230) durchgeführt wird, das eine Benutzerschnittstelle (201) zum Empfangen von Informationen über mindestens einen Satz vorgegebener Funktionen und/oder Eigenschaften (102a-102N) der verteilten Anwendung aufweist, mit den Schritten:
a) Empfangen in einer Abstimmungseinheit (231) der Informationen über mindestens einen Satz vorgegebener Funktionen und/oder Eigenschaften der verteilten Anwendung,
b) Bestimmen in der Abstimmungseinheit mindestens einer Blockchain aus mehreren verfügbaren Blockchains (302a-302N), die zum Bereitstellen von mindestens einer Funktion und/oder Eigenschaft geeignet ist, gemäß den empfangenen Informationen über den mindestens einen Satz vorgegebener Funktionen und/oder Eigenschaften,
c) Hinzufügen der Blockchain-Stackkomponenten (204a-204N), die mit der mindestens einen Blockchain zusammenhängen, zu einem Softwarestack, und
d) Wiederholen der Schritte b) und c) bis für jede Funktion und/oder Eigenschaft der empfangenen Informationen über den mindestens einen Satz vorgegebener Funktionen und/oder Eigenschaften mindestens eine jeweilige Blockchain bestimmt und zum Softwarestack hinzugefügt worden ist;
einen Verteilungsschritt zum Verteilen des Softwarestacks an mindestens eine Knoteneinheit des Datenverarbeitungsnetzwerks;
einen Verbindungsschritt zum Instanziieren des Softwarestacks an der mindestens einen Knoteneinheit,
wobei der instanziierte Softwarestack gemäß der mindestens einen Blockchain im Softwarestack mindestens ein Blockchain-Netzwerk bildet und den Operating Stack bildet; und
einen Betriebsschritt zum
e) Bereitstellen durch den Operating Stack eines Northbound-Interface (210) zu der mindestens einen verteilten Anwendung für mindestens eine Funktion oder Eigenschaft des mindestens einen Satzes vorgegebener Funktionen und/oder Eigenschaften und
f) Bereitstellen durch den Operating Stack eines Southbound-Interface (220) zu mindestens einer Blockchain-Funktion, die der mindestens einen Funktion und/oder Eigenschaft entspricht.

2. Verfahren nach Anspruch 1, wobei im Betriebsschritt das Northbound-Interface den Schritt des Kommunizierens mit der verteilten Anwendung über mindestens eine Anwendungsprogrammierschnittstelle mittels einer vereinheitlichten Programmiersprache (211a-21 1N) ausführt,
wobei das Northbound-Interface eine Anwendungsprogrammierschnittstelle für jeweils die mindestens eine Funktion oder Eigenschaft des Satzes vorgegebener Funktionen und/oder Eigenschaften aufweist.

3. Verfahren nach Anspruch 1 oder 2, wobei das Southbound-Interface mindestens ein Blockchain-spezifisches Plugin (2044) aufweist, das mindestens einen Funktionsadapter (2044a-2044N) zum Adressieren jeder Funktion der Blockchain aufweist, und im Betriebsschritt das Southbound-Interface die Schritte ausführt:
Weiterleiten eingehender Informationen, die die Kommunikation des Northbound-Interface betreffen, von dem Northbound-Interface zu dem mindestens einen Blockchain-spezifischen Plugin; und
Weiterleiten ausgehender Informationen, die eingehende Informationen betreffen, von dem mindestens einen Blockchain-spezifischen Plugin zu dem Northbound-Interface.

4. Verfahren nach Anspruch 3, wobei der Operating Stack einen Dispatcher (2043) aufweist,
der im Konfigurationsschritt die Schritte ausführt:
Empfangen von Informationen über mindestens eine verfügbare Funktion und/oder Eigenschaft von dem mindestens einen Funktionsadapter in dem mindestens einen Blockchain-spezifischen Plugin, und
Informieren der Abstimmungseinheit über die mindestens eine verfügbare Funktion und/oder Eigenschaft; und
die im Betriebsschritt die Schritte ausführt:
Versenden eingehender Informationen von dem Northbound-Interface zu einem spezifischen des mindestens einen Blockchain-spezifischen Plugins des Southbound-Interface, wobei das spezifische des mindestens einen Blockchain-spezifischen Plugins einen Funktionsadapter aufweist, der der mindestens einen Funktion und/oder Eigenschaft entspricht, mit der die eingehenden Informationen zusammenhängen, und Versenden ausgehender Informationen von dem spezifischen des mindestens einen Blockchain-spezifischen Plugins zu dem Northbound-Interface.

5. Verfahren nach einem der Ansprüche 1 bis 4, wobei der Operating Stack einen Verwaltungsserver (202) aufweist,
wobei der Verwaltungsserver mindestens eine Benutzerschnittstelle (201) aufweist, die zum Empfangen von Anweisungen zum Neukonfigurieren des Operating Stack geeignet ist, und der Verwaltungsserver im Betriebsschritt einen Neukonfigurationsschritt ausführt, der mindestens einen der folgenden Schritte aufweist:
Ersetzen, Hinzufügen oder Löschen einer Blockchain vom Softwarestack;
Ersetzen, Hinzufügen oder Löschen eines Blockchain-spezifischen Plugins vom Operating Stack; und
Ersetzen, Hinzufügen oder Löschen eines Funktionsadapters von einem Blockchain-spezifischen Plugin.

6. Datenverarbeitungsnetzwerk mit einem Operating Stack zum Verwalten von mindestens einer verteilten Anwendung, die zum Ausführen des Verfahrens nach einem der Ansprüche 1 bis 5 geeignet ist.

7. Datenverarbeitungsvorrichtung, die Mittel zum Ausführen der Schritte des Verfahrens nach einem der Ansprüche 1 bis 5 aufweist.

8. Computerprogrammprodukt, das Anweisungen aufweist, die, wenn das Programm durch einen Computer ausgeführt wird, den Computer veranlassen, das Verfahren nach einem der Ansprüche 1 bis 5 auszuführen.

9. Computerlesbares-Speichermedium, das Anweisungen aufweist, die, wenn sie durch einen Computer ausgeführt werden, den Computer veranlassen, das Verfahren nach einem der Ansprüche 1 bis 5 auszuführen.

## Revendications

1. Procédé assisté par ordinateur pour l'exploitation d'un réseau de traitement de données avec une pile fonctionnelle (200),
ladite pile fonctionnelle étant prévue pour la gestion d'au moins une application répartie (100) et d'au moins un réseau de traitement de données basé sur des chaînes de blocs, apte à fournir au moins une fonction et/ou propriété, ledit procédé comprenant :
une configuration effectuée par un système de configuration (230) comprenant une interface d'utilisateur (201) pour la réception d'informations sur au moins un ensemble de fonctions et/ou de propriétés prédéterminées (102a-102N) de l'application répartie,
comprenant les étapes suivantes :
a) réception dans une unité d'appariement (231) des informations sur au moins un ensemble de fonctions et/ou de propriétés prédéterminées de l'application répartie,
b) détermination dans l'unité d'appariement d'au moins une chaîne de blocs à partir d'une pluralité de chaînes de blocs (302a-302N) disponibles, apte à fournir au moins une fonction et/ou propriété en fonction des informations reçues sur ledit au moins un ensemble de fonctions et/ou de propriétés prédéterminées,
c) ajout à une pile logicielle des composants de pile (204a-204N) de chaîne de blocs relatifs à ladite au moins une chaîne de blocs, et
d) répétition des étapes b) et c) jusqu'à ce que, pour chaque fonction et/ou propriété des informations reçues sur ledit au moins un ensemble de fonctions et/ou de propriétés prédéterminées, au moins une chaîne de blocs respective ait été déterminée et ajoutée à la pile logicielle ;
une étape de distribution de la pile logicielle à au moins une unité de nœud du réseau de traitement de données ;
une étape de connexion, instanciant la pile logicielle sur ladite au moins une unité de nœud,
la pile logicielle instanciée formant au moins un réseau de chaînes de blocs en fonction de ladite au moins une chaîne de blocs dans la pile logicielle, et formant la pile fonctionnelle ; et
une étape d'exploitation où
e) la pile fonctionnelle fournit une interface vers les couches supérieures (210) à ladite au moins une application répartie pour au moins une fonction ou propriété dudit au moins un ensemble de fonctions et/ou de propriétés prédéterminées et
f) la pile fonctionnelle fournit une interface vers les couches inférieures (220) à ladite au moins une fonction de chaîne de blocs correspondant à ladite au moins une fonction et/ou propriété.

2. Procédé selon la revendication 1, où, lors de l'étape d'exploitation, l'interface vers les couches supérieures exécute l'étape de communication avec l'application répartie via au moins une interface de programmation d'application au moyen d'un langage de programmation unifié (211a-211N),
l'interface vers les couches supérieures présentant une interface de programmation d'application pour chaque fonction ou propriété de ladite au moins une fonction ou propriété de l'ensemble de fonctions et/ou de propriétés prédéterminées.

3. Procédé selon la revendication 1 ou la revendication 2, où l'interface vers les couches inférieures présente au moins un plug-in (2044) spécifique de chaîne de blocs, pourvu d'un adaptateur fonctionnel (2044a-2044N) pour l'adressage de chaque fonction de la chaîne de blocs, et où, lors de l'étape d'exploitation, l'interface vers les couches inférieures exécute les étapes
de transmission d'informations entrantes, relativement à la communication de l'interface vers les couches supérieures, de l'interface vers les couches supérieures audit au moins un plug-in spécifique de chaîne de blocs ; et
de transmission d'informations sortantes, relativement aux informations entrantes, dudit au moins un plug-in spécifique de chaîne de blocs à l'interface vers les couches supérieures.

4. Procédé selon la revendication 3, où la pile fonctionnelle comprend une unité de répartition (2043)
qui, lors de l'étape de configuration, exécute les étapes
de réception d'informations sur au moins une fonction et/ou propriété disponible en provenance dudit au moins un adaptateur fonctionnel dans ledit au moins un plug-in spécifique de chaîne de blocs, et
d'information de l'unité d'appariement sur ladite au moins une fonction et/ou propriété disponible ; et
qui, lors de l'étape d'exploitation, exécute les étapes
de répartition d'informations entrantes de l'interface vers les couches supérieures vers un plug-in spécifique parmi les plug-in spécifiques de chaîne de blocs de l'interface vers les couches inférieures, ledit plug-in spécifique parmi les plug-in spécifiques de chaîne de blocs comprenant un adaptateur fonctionnel correspondant à ladite au moins une fonction et/ou propriété auxquelles sont relatives les informations entrantes, et
de répartition d'informations sortantes du plug-in spécifique parmi les plug-in spécifiques de chaîne de blocs à l'interface vers les couches supérieures.

5. Procédé selon l'une des revendications 1 à 4, où la pile fonctionnelle comprend un serveur de gestion (202),
où le serveur de gestion comprend au moins une interface d'utilisateur (201) apte à recevoir des instructions de reconfiguration de la pile fonctionnelle, et où, lors de l'étape d'exploitation, le serveur de gestion exécute une étape de reconfiguration comprenant au moins une des étapes suivantes :
remplacement, ajout ou suppression d'une chaîne de blocs de la pile logicielle ;
remplacement, ajout ou suppression d'un plug-in spécifique de chaîne de blocs de la pile fonctionnelle ; et
remplacement, ajout ou suppression d'un adaptateur fonctionnel d'un plug-in spécifique de chaîne de blocs.

6. Réseau de traitement de données avec une pile fonctionnelle pour la gestion d'au moins une application répartie apte à exécuter le procédé selon l'une des revendications 1 à 5.

7. Dispositif de traitement de données comprenant un moyen d'exécution des étapes du procédé selon l'une des revendications 1 à 5.

8. Produit de programme informatique comprenant des instructions qui, lorsque le programme est lancé par un ordinateur, entraînent l'exécution par ledit ordinateur du procédé selon l'une des revendications 1 à 5.

9. Support de stockage lisible par ordinateur comprenant des instructions qui, exécutées par un ordinateur, entraînent l'exécution par ledit ordinateur du procédé selon l'une des revendications 1 à 5.
